# EUROPÄISCHE PATENTSCHRIFT

(11) **EP 2 335 336 B1**
(45) Veröffentlichungstag und Bekanntmachung des Hinweises auf die Patenterteilung: **04.12.2013**
(21) Anmeldenummer: 09782440.3
(22) Anmeldetag: 01.09.2009
(51) Int. Cl.: H02J 3/38

(54) **WINDENERGIEANLAGE**
WIND ENERGY SYSTEM
ÉOLIENNE

(30) Priorität: 14.10.2008 DE 102008037449
(43) Veröffentlichungstag der Anmeldung: 22.06.2011
(73) Patentinhaber: Kenersys GmbH, 48155 Münster (DE)
(72) Erfinder: LUETZE, Henning, 48455 Bad Bentheim (DE)
(74) Vertreter: Bossmeyer, Jörg Peter
(86) Internationale Anmeldenummer: PCT/EP2009/061255
(87) Internationale Veröffentlichungsnummer: WO 2010/043441

(56) Entgegenhaltungen:
- EP-A2- 1 840 090
- EP-A2- 2 133 561
- WO-A1-2005/113964
- WO-A1-2008/135605
- WO-A2-2004/114493
- US-A1- 2006 028 025

## Beschreibung

Die Erfindung betrifft eine Windenergieanlage mit einer Halterung, einem an der Halterung um eine Rotorachse drehbar gelagerten, mehrere Rotorblätter aufweisenden und mittels Windkraft angetrieben oder antreibbaren Rotor, einem mit dem Rotor gekoppelten elektrischen Generator, der von dem Rotor antreibbar oder angetrieben ist, einem mit dem Generator elektrisch gekoppelten ersten Umrichter, der mit einem elektrischen Verteilernetz gekoppelt ist oder werden kann, und wenigstens einem elektrischen oder teilelektrischen Hilfssystem.

In einer Windenergieanlage werden zu ihrem Betrieb erforderliche Hilfssysteme verwendet, die mit elektrischer Energie versorgt werden müssen. Dies sind z.B. Pumpen, Lüfter, Steuerungen, Schaltgeräte usw. Eine heute übliche Windenergieanlage mit großer Leistung, d.h. mit einer Leistung > 1 MW, ist für die Energieeinspeisung in öffentliche Energieverteilernetze konzipiert. Ein Netzanschluss ist daher im Normalbetriebsfall der Anlage immer vorhanden. Ferner erfolgt die Versorgung der Hilfsaggregate der Anlage in der Regel von dem gemeinsamen Netzanschluss, über den der Generator der Windenergieanlage in das Netz einspeist. Fällt das Netz aus oder ist es gestört, kann die Anlage nicht mehr in das Energieverteilernetz einspeisen. Ferner ist auch die Netzversorgung der Hilfsaggregate nicht mehr gewährleistet. Zwar sind in der Regel Energiespeicher in der Anlage vorhanden, diese sind aber nur für kleine Leistungen ausgelegt, um die Steuerung der Anlage für eine gewisse Zeit lang weiterzuversorgen, sodass ein kontrolliertes Abfahren der Anlage erzielt werden kann. Zusätzlich existieren bei einer Anlage mit Rotorblattverstellung Energiespeicher, welche die Rotorblätter kontrolliert oder unkontrolliert in Fahnenstellung fahren können, um einen sicheren Anlagenzustand zu erreichen.

Aus der US 5 907 192 ist ein Notstromsystem für eine Windenergieanlage bekannt, welches einen mit einem Generator gekoppelten Gleichrichter und einen diesem nachgeschalteten und mit einem Versorgungsnetz gekoppelten Wechselrichter verwendet. Ein Hilfsnetz, welches an das Versorgungsnetz angeschlossen ist, versorgt über einen Transformator und einen Gleichrichter einen Gleichstrombus, über den eine Blattwinkelsteuerung und ein Steuerungssystem mit elektrischer Energie versorgt werden, welches eine Störung des Versorgungsnetzes erfassen kann. Im Falle einer Störung des Versorgungsnetzes trennt das Steuerungssystem mittels Schalter den Wechselrichter und das Hilfsnetz vom Versorgungsnetz und koppelt mittels anderer Schalter das Hilfsnetz mit dem Wechselrichter, sodass eine Versorgung des Hilfsnetzes unter Zwischenschaltung des Gleichrichters und des Wechselrichters durch den Generator erfolgt. Während dieser Schaltvorgänge wird das Steuerungssystem aus Kondensatoren mit elektrischer Energie versorgt.

Der Wechselrichter wird insbesondere deshalb vom Versorgungsnetz getrennt, damit sich die Störungen des Versorgungsnetzes nicht auf das Hilfsnetz auswirken. Wird der Wechselrichter nach dem Ende der Störung wieder mit dem Versorgungsnetz verbunden, so muss die Generatorspannung in der Regel erst mit der Netzspannung des Versorgungsnetzes synchronisiert werden, sodass die Zuschaltzeit relativ lang ist.

Aus der EP2133561 ist auch noch eine Windenergieanlage bekannt, welche ein Notstromsystem aufweist, das vom Hauptumrichter gespeist wird.

Aufgabe der Erfindung ist es, die Hilfssysteme auch bei gestörtem oder ausgefallenem Energieverteilernetz mit elektrischer Energie versorgen zu können. Ferner soll die Zuschaltzeit nach dem Ende der Störung möglichst gering sein.

Diese Aufgabe wird erfindungsgemäß mit einer Windenergieanlage nach Anspruch 1 gelöst. Bevorzugte Weiterbildungen der Erfindung sind in den Unteransprüchen gegeben.

Die erfindungsgemäße Windenergieanlage weist eine Halterung, einen an der Halterung um eine Rotorachse drehbar gelagerten, mehrere Rotorblätter umfassenden und mittels Windkraft angetriebenen oder antreibbaren Rotor, einen mit dem Rotor gekoppelten elektrischen Generator, der von dem Rotor antreibbar oder angetrieben ist, einen mit dem Generator elektrisch gekoppelten ersten Umrichter, der mit einem elektrischen Verteilernetz gekoppelt oder koppelbar ist, und wenigstens ein elektrisches oder teilelektrisches Hilfssystem auf, welches unter Zwischenschaltung eines zweiten Umrichters elektrisch mit dem Generator gekoppelt oder koppelbar ist.

Bei der erfindungsgemäßen Windenergieanlage ist es möglich, das wenigstens eine Hilfssystem auch bei ausgefallenem oder gestörtem Verteilernetz durch den Generator der Windenergieanlage mit elektrischer Energie zu versorgen. Ferner ist die elektrische Versorgung des wenigstens einen Hilfssystems nicht von dem ersten Umrichter abhängig, sodass dieser vorzugsweise dauerhaft mit dem Verteilernetz gekoppelt ist und insbesondere nicht von dem Verteilernetz getrennt werden muss. Die Zuschaltzeit entfällt somit oder ist zumindest reduziert. Dies soll aber nicht einschränkend ausgelegt werden, sodass es auch möglich ist, im Falle einer Störung des Verteilernetzes den ersten Umrichter vom Verteilernetz zu trennen. In diesem Fall kann aber wieder eine relativ lange Zuschaltzeit auftreten.

Eine Störung des Verteilernetzes kann bedeuten, dass das Verteilernetz vollständig ausfällt. Dies muss aber nicht so sein. Vielmehr können auch eine unerwünschte Spannung und/oder eine unerwünschte Netzfrequenz eine Störung des Verteilernetzes darstellen. Bei dem Verteilernetz handelt es sich insbesondere um das öffentliche Energieverteilernetz oder um ein lokales Netz. Ein lokales Netz kann z.B. ein Netz der Windenergieanlage, ein Windparknetz oder ein Teilnetz eines größeren Netzes, wie z.B. ein Windparkteilnetz sein. Handelt es sich bei dem Verteilernetz um ein lokales Netz, so ist dieses vorzugsweise mittelbar oder unmittelbar mit dem öffentlichen Energieverteilernetz gekoppelt oder koppelbar.

Der Generator kann eine Asynchronmaschine sein und ist z.B. als Kurzschlussläufer oder als Schleifringläufer ausgebildet. Bevorzugt ist der Generator eine Synchronmaschine. Die elektrische Kopplung des ersten Umrichters mit dem Generator kann statorseitig oder läuferseitig am Generator erfolgen. Bevorzugt ist der erste Umrichter aber mit den Statorwicklungen des Generators elektrisch verbunden. Ferner kann die elektrische Kopplung des zweiten Umrichters mit dem Generator statorseitig oder läuferseitig am Generator erfolgen. Bevorzugt ist der zweite Umrichter mit den Statorwicklungen des Generators elektrisch verbunden.

Der erste Umrichter ist z.B. als Frequenzumrichter ausgebildet. Insbesondere kann die vom ersten Umrichter abgegebene Spannung und/oder deren Frequenz selbst dann stabil gehalten werden, wenn die Generatordrehzahl aufgrund sich ändernder Windverhältnisse variiert. Die Windenergieanlage kann somit einen drehzahlvariablen Antrieb aufweisen bzw. drehzahlvariabel betrieben werden. Der erste Umrichter weist bevorzugt einen mit dem Generator elektrisch gekoppelten oder koppelbaren Gleichrichter und einen diesem nachgeschalteten Wechselrichter auf, der mit dem Verteilernetz gekoppelt oder koppelbar ist. Insbesondere ist der Wechselrichter dauerhaft mit dem Verteilernetz gekoppelt. Bevorzugt ist der Gleichrichter dauerhaft mit dem Generator gekoppelt. Der Wechselrichter ist dem Gleichrichter vorzugsweise unter Zwischenschaltung eines zumindest einen Kondensator umfassenden Gleichstromzwischenkreises nachgeschaltet.

Der zweite Umrichter ist z.B. als Frequenzumrichter oder als Gleichrichter ausgebildet. Insbesondere ist der zweite Umrichter elektrisch direkt mit dem Generator gekoppelt. Bei ordnungsgemäß arbeitendem Generator und gestörtem oder ausgefallenem Verteilernetz können der zweite Umrichter und somit auch das wenigstens eine Hilfssystem durch den Generator mit elektrischer Energie versorgt werden. Ferner ist es möglich, dass der zweite Umrichter das wenigstens eine Hilfssystem mit elektrischer Energie oder Strom und/oder Spannung mit einer Frequenz versorgt, die sich von der Netzfrequenz des elektrischen Verteilernetzes unterscheidet. Somit kann die Frequenz der dem wenigstens einen Hilfssystem zugeführten elektrischen Energie für das wenigstens eine Hilfssystem optimiert werden, und zwar unabhängig von der Frequenz des Verteilernetzes. Bevorzugt liegt die Betriebsfrequenz des wenigstens einen Hilfssystems in einem Bereich von 0 Hz bis 5 KHz.

Der zweite Umrichter ist eingangsseitig, bevorzugt unter Zwischenschaltung wenigstens eines ersten Schalters, elektrisch mit dem Generator verbunden oder verbindbar ist. Somit kann der zweite Umrichter von dem Generator getrennt werden. Ferner ist der zweite Umrichter ausgangsseitig, bevorzugt unter Zwischenschaltung wenigstens eines zweiten Schalters, elektrisch mit dem wenigstens einen Hilfssystem verbunden oder verbindbar. Somit kann der zweite Umrichter von dem wenigstens einen Hilfssystem getrennt werden.

Gemäß einer ersten Betriebsart wird der zweite Umrichter von dem Generator mit elektrischer Energie versorgt, wobei der zweite Umrichter das wenigstens eine Hilfssystem mit elektrischer Energie versorgt. Dafür sind insbesondere der erste und der zweite Schalter geschlossen.

Der zweite Umrichter weist insbesondere einen mit dem Generator elektrisch gekoppelten oder koppelbaren Gleichrichter und einen diesem nachgeschalteten und mit dem wenigstens einen Hilfssystem elektrisch gekoppelten oder koppelbaren Wechselrichter auf. Bevorzugt weist der zweite Umrichter einen zusätzlichen Gleichrichter auf, der mit dem Verteilernetz elektrisch gekoppelt oder koppelbar ist. Der Wechselrichter ist insbesondere beiden Gleichrichtern nachgeschaltet, wobei die Gleichrichter ausgangsseitig insbesondere zusammengeschaltet sind. Der zusätzliche Gleichrichter ist bevorzugt unter Zwischenschaltung wenigstens eines dritten Schalters mit dem elektrischen Verteilernetz elektrisch verbunden oder verbindbar. Somit ist es möglich, den zweiten Umrichter durch Öffnen des ersten Schalters und durch Schließen des dritten Schalters aus dem elektrischen Verteilernetz mit elektrischer Energie zu versorgen. Alternativ kann der zweite Umrichter durch Schließen des ersten Schalters und durch Öffnen des dritten Schalters von dem Generator mit elektrischer Energie versorgt werden. Der Wechselrichter ist dem oder den Gleichrichtern vorzugsweise unter Zwischenschaltung eines zumindest einen Kondensator umfassenden Gleichstromzwischenkreises nachgeschaltet. Ferner kann zwischen dem oder den Gleichrichtern und dem Wechselrichter oder dem Gleichstromzwischenkreises ein Hochsetzsteller geschaltet sein.

Gemäß einer zweiten Betriebsart wird der zweite Umrichter aus dem Verteilernetz mit elektrischer Energie versorgt, wobei der zweite Umrichter das wenigstens eine Hilfssystem mit elektrischer Energie versorgt. Insbesondere kann zwischen der ersten und der zweiten Betriebsart umgeschaltet werden. Für dieses Umschalten kann ein Umschalter vorgesehen sein, durch den der Eingang des Umrichters wahlweise mit dem Generator und/oder mit dem Verteilernetz gekoppelt wird oder werden kann. Bevorzugt sind in der zweiten Betriebsart der dritte und der zweiter Schalter geschlossen. Ferner kann der erste Schalter geöffnet sein.

Bevorzugt ist das wenigstens eine Hilfssystem unter Zwischenschaltung wenigstens eines vierten Schalters mit dem elektrischen Verteilernetz elektrisch verbunden oder verbindbar. Somit ist es möglich, das wenigstens eine Hilfssystem durch Schließen des vierten Schalters direkt aus dem elektrischen Verteilernetz mit elektrischer Energie zu versorgen, und zwar ohne Zwischenschaltung des zweiten Umrichters. Insbesondere ist der zweite Schalter geöffnet.

Gemäß einer dritten Betriebsart wird das wenigstens eine Hilfssystem aus dem Verteilernetz mit elektrischer Energie versorgt, und zwar ohne Zwischenschaltung des zweiten Umrichters. Dafür ist insbesondere der vierte Schalter geschlossen. Ferner kann der zweite Schalter geöffnet sein. Diese Betriebsart eignet sich insbesondere für ein Verteilernetz, das relativ stabil ist.

Somit ist es möglich, bei intaktem Verteilernetz und unzureichender Generatorleistung das wenigstens eine Hilfssystem durch das Verteilernetz mit elektrischer Energie zu versorgen. Bei der zweiten Betriebsart erfolgt die Versorgung des wenigstens einen Hilfssystems durch das Verteilernetz unter Zwischenschaltung des zweiten Umrichters (indirekt), und bei der dritten Betriebsart erfolgt die Versorgung des wenigstens einen Hilfssystems durch das Verteilernetz ohne Zwischenschaltung des zweiten Umrichters (direkt).

Das Verteilernetz weist bevorzugt mehrere, insbesondere drei, Phasen auf, sodass der dritte und/oder der vierte Schalter bevorzugt mehrphasig, insbesondere dreiphasig, ausgebildet sind. Ferner erzeugt der Generator elektrische Energie bevorzugt in mehreren Phasen, sodass auch der erste Umrichter, der zweite Umrichter und/oder der erste Schalter bevorzugt mehrphasig, insbesondere dreiphasig, ausgebildet sind. Ferner ist der zweite Schalter bevorzugt mehrphasig, insbesondere dreiphasig, ausgebildet.

Gemäß einer Weiterbildung der Erfindung ist der zweite Umrichter elektrisch mit einer Steuerung verbunden, mittels welcher zumindest eine Betriebsgröße des wenigstens einen Hilfssystems gesteuert oder geregelt wird oder werden kann. Bevorzugt wird die zumindest eine Betriebsgröße mittels der Steuerung gemessen, die durch Regelung bzw. Steuerung des zweiten Umrichters die zumindest eine Betriebsgröße in spezifizierten Grenzen hält oder halten kann. Die zumindest eine Betriebsgröße umfasst bevorzugt die von dem zweiten Umrichter an das wenigstens eine Hilfssystem abgegebene Spannung und/oder deren Frequenz, sodass mittels der Steuerung die von dem zweiten Umrichter an das wenigstens eine Hilfssystem abgegebene Spannung und/oder deren Frequenz gesteuert oder geregelt wird oder werden kann. Insbesondere umfasst die Steuerung eine Regelung für die von dem zweiten Umrichter an das wenigstens eine Hilfssystem abgegebene Spannung und/oder deren Frequenz, sodass diese Spannung und/oder diese Frequenz stabil oder in spezifizierten Grenzen gehalten wird oder werden kann.

Die Windenergieanlage weist bevorzugt eine Windenergieanlagensteuerung auf, die insbesondere wenigstens eine Betriebsgröße des ersten Umrichters und/oder des Generators misst. Dabei kann die Windenergieanlagensteuerung z.B. die Generatorleistung in Abhängigkeit von der gemessenen Betriebsgröße steuern oder regeln. Insbesondere umfasst die wenigstens eine Betriebsgröße die Generatorleistung oder eine diese charakterisierende Größe.

Bevorzugt ist das wenigstens eine Hilfssystem oder wenigstens eines der Hilfssysteme, insbesondere mittels der Windenergieanlagensteuerung, elektrisch von dem zweiten Umrichter trennbar. Somit ist es möglich, bei zu geringer Leistung aus dem Generator ein oder das wenigstens eine Hilfssystem abzuschalten. Bevorzugt ist, insbesondere mittels der Windenergieanlagensteuerung, zumindest ein zusätzliches Hilfssystem elektrisch mit dem zweiten Umrichter koppelbar, insbesondere bei höherer oder zu hoher Generatorleistung.

Der Rotor weist bevorzugt eine Rotornabe auf, an der die Rotorblätter befestigt sind. Vorzugsweise ist zumindest ein Rotorblatt oder eines der Rotorblätter mittels eines Rotorblattverstellantriebs um seine Blattachse drehbar. Insbesondere wird der Rotorblattverstellantrieb mittels der Windenergieanlagensteuerung gesteuert oder geregelt.

Gemäß einer Weiterbildung misst die Steuerung wenigstens eine Betriebsgröße des ersten Umrichters und/oder des Generators. Insbesondere kann die Steuerung das wenigstens eine Hilfssystem oder eines der Hilfssysteme abschalten oder regeln, sodass bei zu geringer Generatorleistung durch dieses Abschalten oder Regeln der Leistungsbedarf an die vom Generator gelieferte Leistung angepasst werden kann. Bevorzugt kann die Steuerung die Generatorleistung regeln und/oder wenigstens ein zusätzliches Hilfssystem zuschalten, sodass bei höherer oder zu hoher Leistung vom Generator die Steuerung die Generatorleistung herunterregeln und/oder wenigstens ein zusätzliches Hilfssystem zuschalten kann. Das Herunterregeln der Generatorleistung erfolgt z.B. direkt oder unter Zwischenschaltung der Windenergieanlagensteuerung durch Rotorblattverstellung. Das Abschalten oder Zuschalten eines Hilfssystems erfolgt insbesondere dadurch, dass dieses von dem zweiten Umrichter getrennt bzw. mit diesem gekoppelt wird. Die wenigstens eine Betriebsgröße umfasst bevorzugt die Generatorleistung oder eine diese charakterisierende Größe.

Bevorzugt sind mehrere Hilfssysteme unter Zwischenschaltung des zweiten Umrichters elektrisch mit dem Generator gekoppelt. Ferner umfasst das wenigstens eine Hilfssystem oder umfassen die Hilfssysteme z.B. einen Azimutantrieb, wenigstens einen Rotorblattverstellantrieb, wenigstens eine Heizung, wenigstens eine Kühlung, wenigstens eine Steuerung, wenigstens einen Lüfter, wenigstens eine Pumpe, wenigstens eine Phasenkompensationseinrichtung und/oder wenigstens einen Energiespeicher. Insbesondere umfasst das wenigstens eine Hilfssystem zumindest eine Heizung, Kühlung und/oder zusätzliche Verbraucher, die bei einem Ausfall oder einer Störung des elektrischen Verteilernetzes durch den Generator mit elektrischer Energie versorgt werden. Dadurch können Betriebsmittel der Windenergieanlage auf einer gewünschten Temperatur oder auf einer Mindesttemperatur gehalten werden.

Gemäß einer Weiterbildung ist eine Schutzschaltung, vorzugsweise in Form eines Brems-Choppers (Brake-Chopper), in den Zwischenkreis des ersten Umrichters geschaltet. Die Schutzschaltung kann dazu verwendet werden, die Zwischenkreisspannung des ersten Umrichters zu begrenzen. Insbesondere wird die Schutzschaltung bzw. der Brake-Chopper dazu verwendet, bei gestörtem oder fehlendem Netz den Generator zu belasten, mit dem Ziel, ein Mindestdrehmoment auf der Getriebewelle eines Getriebes zu erzeugen, dass vorzugsweise zwischen den Rotor und den Generator geschaltet ist. Damit wird verhindert, dass die Lager in dem Getriebe aufgrund der niedrigen Last anfangen durchzurutschen anstatt auf den Rollen oder Kugeln abzurollen. Das Durchrutschen kann dazu führen, dass der Schmierfilm in den Wälzlagern abreißt und sich Riefen und Beschädigungen in den Laufringen der Lager bilden, was zu Frühausfällen von Getriebelagern führen kann. Die Schutzschaltung bzw. der Brake-Chopper wird von der Windenergieanlagensteuerung so angesteuert, dass eine Generatorleistung, die nicht in das gestörte Netz abgegeben werden kann, in einem oder mehreren Widerständen in Wärme umgesetzt wird. Dadurch ist es ohne Gefahr für das Getriebe möglich, ohne Netzanschluss oder bei gestörtem Netz die Anlage bei niedriger Drehzahl für den Eigenbedarf zu betreiben. Der oder die Widerstände sind insbesondere Teil der Schutzschaltung bzw. des Brake-Choppers.

Zusammenfassend kann somit die Versorgung der Hilfssysteme der Windenergieanlage, die insbesondere einen drehzahlvariablen Antrieb mit einem Umrichter für den Hauptantrieb (erster Umrichter oder Hauptumrichter) der Windenergieanlage besitzt, durch einen Umrichter (zweiter Umrichter oder Hilfsumrichter) erfolgen, der statorseitig oder läuferseitig an dem Generator der Windenergieanlage angeschlossen ist. Die Aufgabe des Umrichters für die Hilfssysteme (zweiter Umrichter) besteht insbesondere darin, die Spannung und die Frequenz, die erforderlich ist, um die Hilfssysteme zu betreiben, zu erzeugen und auf spezifizierte Grenzen zu regeln. Der Umrichter für die Hilfssysteme ist bevorzugt mit einer Steuerung verbunden, die mindestens eine Betriebsgröße der Hilfssysteme misst und durch Regelung dieses Umrichters die erforderlichen Betriebsgrößen der Hilfssysteme in spezifizierten Grenzen hält. Die Steuerung kann z.B. bei zu geringer Leistung aus dem Generator durch Wegschalten oder Regelung der Verbraucher (Hilfssysteme) den Leistungsbedarf an die gelieferte Leistung anpassen. Bei zu hoher Leistung vom Generator kann die Steuerung z.B. direkt oder indirekt über die Windenergieanlagensteuerung durch Rotorblattverstellung die erzeugte Leistung auf den erforderlichen Wert herunterregeln und/oder zusätzlich Hilfssysteme zuschalten. Die Steuerung misst dabei bevorzugt mindestens eine Betriebsgröße des Umrichters für den Hauptantrieb oder des Generators zur Verwendung für die Regelung der Generatorleistung. Bei vorhandenem Netz und zu geringer Windgeschwindigkeit werden die Hilfssysteme z.B. über den Umrichter für die Hilfssysteme direkt aus dem Netz versorgt. Die Hilfssysteme der Windenergieanlage können insbesondere unabhängig von den Netzverhältnissen betrieben werden. Bei Netzstörung oder Ausfall bleiben sämtliche Hilfssysteme betriebsbereit und werden durch den Generator der Windenergieanlage mit Energie versorgt, solange eine ausreichend hohe Windgeschwindigkeit vorhanden ist. Insbesondere sind die Hilfssysteme unabhängig von der jeweiligen Netzfrequenz von z.B. 50 oder 60 Hz. Ferner ist es möglich, die Windenergieanlage oder einen Windpark mit erfindungsgemäßen Windenergieanlagen, deren Netzanschluss erst nach Errichtung der Windenergieanlagen fertiggestellt wird, in Betrieb zu nehmen. Solange genügend Leistung erzeugt wird, um die Hilfssysteme zu betreiben, wird ein längeres Auskühlen und eine Kondensation in den Anlageteilen verhindert. Stillstandsmarken in Lagern, die zu Frühausfall der Lager führen, können verhindert werden.

Die Versorgung des zweiten Umrichters mit Wechselspannung von wenigstens einer Phase erfolgt im bevorzugten Betrieb durch direkte Kopplung des zweiten Umrichters mit dem Generator. Dies wird durch Schließen des ersten Schalters ermöglicht. Erst wenn die Generatorspannung oder Leistung nicht mehr ausreichend ist, um das Bordnetz bzw. das wenigstens eine Hilfssystem ausreichend zu versorgen, erfolgt eine Umschaltung der Versorgung des zweiten Umrichters direkt auf das Verteilernetz durch Öffnen des ersten Schalters und durch Schließen des dritten Schalters. Das passiert z.B. beim Anfahren der Windenergieanlage oder sobald die Windgeschwindigkeit beim Betrieb soweit zurückgeht, dass die Generatordrehzahl nicht mehr ausreichend hoch ist, oder bei Störungen der Windenergieanlage, bei der sie abgebremst werden muss. Wenn die Bordversorgung ausfällt, z.B. bei Ausfall des zweiten Umrichters, besteht noch die Möglichkeit, das wenigstens eine Hilfssystem über den vierten Schalter direkt aus dem Verteilernetz zu versorgen. Insbesondere ist die elektrische Versorgung des wenigstens einen Hilfssystems funktionell nicht mit dem ersten Umrichter gekoppelt und somit von diesem unabhängig.

Der zweite Umrichter weist bevorzugt einen Hochsetzsteller auf. Dieser sorgt dafür, dass die Spannung im Zwischenkreis des zweiten Umrichters auch bei variabler Generatorspannung und Frequenz auf eine konstante Gleichspannung geregelt werden kann, aus der der Wechselrichter des zweiten Umrichters dann eine konstante Dreiphasen-Wechselspannung und Frequenz erzeugen kann. Auf den Hochsetzsteller kann aber auch verzichtet werden, insbesondere dann, wenn die Generatorspannung durch einen Erregersteller oder durch Kondensatoren an der Statorwicklung auch bei sehr niedriger Drehzahl hochgeregelt werden kann, oder wenn sich auf einen kleineren Drehzahlbereich beim Generator beschränkt wird.

Bevorzugt erfolgt eine Verbesserung des Kalt-Wetter-Verhaltens durch Aufrechterhaltung von Temperaturniveaus auch bei Netzausfall. Bei Netzausfall ist die Versorgung der Heizungen bei ausreichend hoher Windgeschwindigkeit gegeben. Die Anlage kann daher länger im betriebswarmen Zustand gehalten werden, was zur Verlängerung der Lebensdauer der Komponenten beiträgt. Insbesondere kann Kondensation in der elektrischen Anlage und im Getriebe vermieden werden. Bei höherer Windgeschwindigkeit können auch zusätzliche Verbraucher zugeschaltet werden, um Getriebe und Generator durch die steigenden Verluste bei höherer Belastung im betriebswarmen Zustand zu halten. Die Windenergieanlage kann bereits in Betrieb genommen und fast vollständig getestet werden, auch wenn der Anschluss an das Versorgungsnetz (Verteilernetz) noch nicht vorhanden ist. Ferner kann an Heißwetter-Standorten eine Kühlung anstelle der Heizung betrieben werden. Bevorzugt wird somit eine Mindesttemperatur der Betriebsmittel auch bei Netzausfall oder Netzstörung für einen längeren Zeitraum erhalten, insbesondere durch die Versorgung der wenigstens einen Heizung, der wenigstens einen Kühlung und/oder des wenigstens einen zusätzlichen Verbrauchers der Windenergieanlage mit Generatorleistung.

Der erste Umrichter ist direkt mit dem Verteilernetz verbunden. Bei Windenergieanlagen mit elektrischen Maschinen, deren Wicklungen direkt mit dem Verteilernetz verbunden sind, kann z.B. das Problem auftreten, dass die transienten Vorgänge bei Spannungswiederkehr schlecht beherrschbar sind und daher die Maschinen bei zu langem oder vollständigem Netzausfall durch Schütze vom Netz getrennt werden müssen. Bei der erfindungsgemäßen Windenergieanlage muss der erste Umrichter aber nicht vom Netz getrennt werden und kann nach einer halben Netzperiode wieder die Netzgrößen abgeben, regeln und/oder beeinflussen. Eine elektrische Maschine, die durch Schütze getrennt ist, braucht wesentlich länger um wieder zuschaltbereit zu sein, weil die Generatorspannung erst mit der zurückgekehrten Netzspannung synchronisiert werden muss und die Zuschaltzeit der Leistungsschütze im Bereich von 100 Millisekunden und länger liegt.

Durch den zweiten Umrichter können Komponenten (z.B. Motoren, Transformatoren) des wenigstens einen Hilfssystems, die netzfrequenzabhängig ausgelegt werden müssen, unabhängig von der Netzfrequenz ausgelegt werden. Dadurch kann eine für die Windenergieanlage optimale Konfiguration gewählt werden. Die Komponenten können unabhängig von der Versorgungs-Netzfrequenz überall gleich eingesetzt werden. Es muss daher keine Unterschiede mehr geben zwischen Betriebsmitteln in der Anlage, die für 50 oder 60 oder 16 2/3 Hz ausgelegt sind, sondern es kann eine beliebige, insbesondere eine für die Anlage optimale, Auslegung geben. Eine Versorgung mit Gleichspannung, d.h. Frequenz = 0, ist ebenfalls möglich. Entsprechendes gilt für die Betriebsspannung der Komponenten. Es kann eine beliebige Spannung, vorzugsweise 400V oder 230V, festgelegt werden. Gemäß einer Weiterbildung wird somit wenigstens ein Betriebsmittel der Windenergieanlage, das wenigstens eine Hilfssystem und/oder wenigstens eine Komponente davon mit einer Betriebsfrequenz betrieben, die sich von der Netzfrequenz des Verteilernetzes unterscheidet.

Die Erfindung wird nachfolgend anhand einer bevorzugten Ausführungsform unter Bezugnahme auf die Zeichnung beschrieben. In der Zeichnung zeigen:
- Fig. 1: eine schematische Darstellung einer Windenergieanlage gemäß einer Ausführungsform der Erfindung,
- Fig. 2: ein schematisches Schaltbild zur Versorgung von Hilfssystemen der Windenergieanlage und
- Fig. 3: ein schematisches Schaltbild mit einer Steuerung der Windenergieanlage.

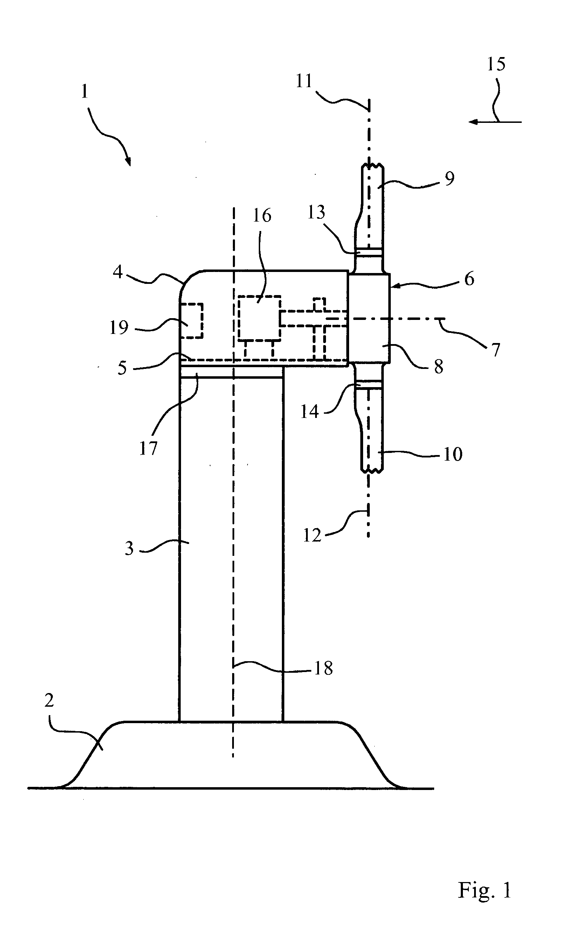

Aus Fig. 1 ist eine Windenergieanlage 1 gemäß einer Ausführungsform der Erfindung ersichtlich, wobei ein auf einem Fundament 2 aufstehender Turm 3 an seinem dem Fundament 2 abgewandten Ende mit einem Maschinenhaus 4 verbunden ist. In dem Maschinenhaus 4 ist eine Halterung 5 befestigt, an der ein Rotor 6 um eine Rotorachse 7 drehbar gelagert ist, der eine Rotornabe 8 und damit verbundene Rotorblätter 9 und 10 aufweist, die jeweils um ihre Blattachse 11, 12 relativ zur Rotornabe 8 drehbar sind. Jedes Rotorblatt 9, 10 ist mit einem Verstellantrieb 13, 14 mechanisch gekoppelt, mittels welchem das jeweilige Rotorblatt 9, 10 um die zugehörige Blattachse 11, 12 gedreht werden kann. Der Rotor 6 wird durch Windkraft 15 um die Rotorachse 7 gedreht und ist mechanisch mit einem elektrischen Generator 16 gekoppelt, der in dem Maschinenhaus 4 angeordnet und an der Halterung 5 befestigt ist. Ferner ist das Maschinenhaus 4 mittels eines Azimutantriebs 17 um die Längsachse 18 des Turms 3 drehbar. Für den kontrollierten Betrieb der Windenergieanlage 1 ist eine Windenergieanlagensteuerung 19 vorgesehen, mittels welcher unter anderem die Verstellantriebe 13 und 14 sowie der Azimutantrieb 17 gesteuert werden.

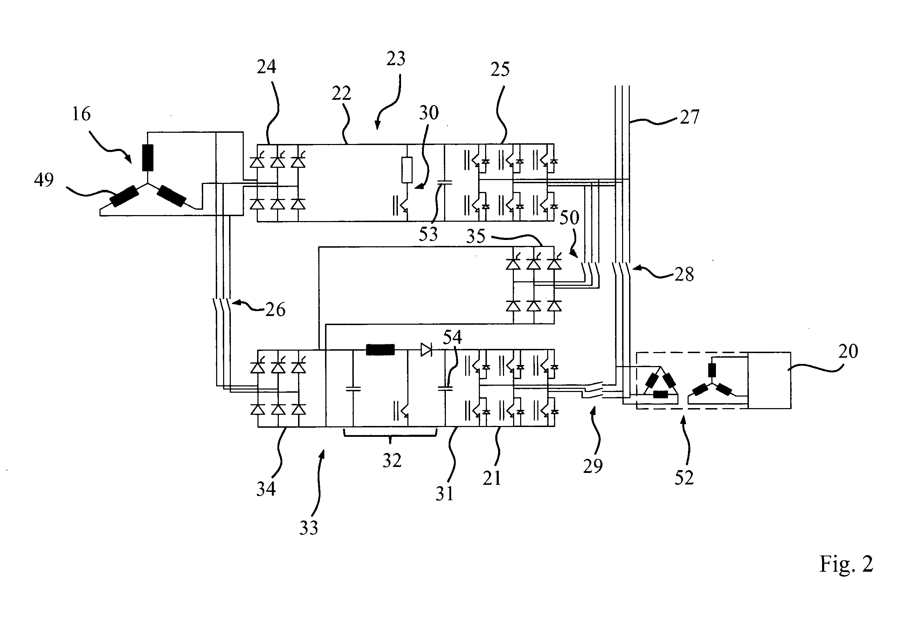

Aus Fig. 2 ist ein schematisches Schaltbild zur Versorgung von Hilfssystemen 20 dargestellt, die über einen Umrichter 33 mit Statorwicklungen 49 des Generators 16 elektrisch gekoppelt oder koppelbar sind. Ferner ist ein Hauptumrichter 23 vorgesehen, der einen Gleichrichter 24 und einen Wechselrichter 25 aufweist, der mit einem elektrischen Energieverteilernetz 27, z.B. dem öffentlichen Energieverteilernetz, verbunden ist. Wie aus dem Schaltbild ersichtlich, weist der Gleichrichter 24 drei Dioden und drei Thyristoren auf. Ferner umfasst der Wechselrichter 25 sechs IGBTs. Der Bereich zwischen dem Gleichrichter 24 und dem Wechselrichter 25 wird als Zwischenkreis 22 bezeichnet, der einen Zwischenkreiskondensator 53 aufweist. Ferner umfasst der Zwischenkreis 22 eine Schutzschaltung (Brake-Chopper) 30, die als Schutz für die IGBTs Wirkleistung vernichtet, wenn die Zwischenkreisspannung zu hoch ist. Der Gleichrichter 24 ist elektrisch mit den Statorwicklungen 49 des Generators 16 gekoppelt, der im normalen Betrieb elektrische Energie unter Zwischenschaltung des Umrichters 23 in das Energieverteilernetz 27 einspeist. Es können mehrere solcher Hauptumrichter vorgesehen sein, die ausgangsseitig mit dem Verteilernetz 27 und eingangsseitig mit unterschiedlichen Statorwicklungen des Generators 16 verbunden sind.

Der Umrichter 33 weist einen Gleichrichter 34, einen Hochsetzsteller 32 und einen Wechselrichter 21 auf, der unter Zwischenschaltung des Hochsetzstellers 32 mit dem Gleichrichter 34 elektrisch verbunden ist, wobei der Schaltungsabschnitt zwischen dem Gleichrichter 34 bzw. Hochsetzsteller 32 und dem Wechselrichter 21 als Zwischenkreis 31 bezeichnet wird, der einen Zwischenkreiskondensator 54 aufweist. Wie aus dem Schaltbild ersichtlich, weist der Gleichrichter 34 drei Dioden und drei Thyristoren auf. Ferner umfasst der Wechselrichter 21 sechs IGBTs. Der Gleichrichter 34 ist über einen Schalter 26 elektrisch mit den Statorwicklungen 49 des Generators 16 verbunden. Ferner ist der Wechselrichter 21 über einen Schalter 29 elektrisch mit den Hilfssystemen 20 verbunden, die wiederum über einen Schalter 28 elektrisch mit dem Energieverteilernetz 27 gekoppelt sind. An den Ausgang des Gleichrichters 34 ist der Ausgang eines Gleichrichters 35 angeschlossen, dessen Eingang über einen Schalter 50 elektrisch mit dem Energieverteilernetz 27 gekoppelt ist. Wie aus dem Schaltbild ersichtlich, weist der Gleichrichter 35 drei Dioden und drei Thyristoren auf. Den Hilfssystemen 20 kann ein Transformator 52 vorgeschaltet sein, der aber auch entfallen kann. Gemäß einer Ausgestaltung kann der Transformator 52 den Hilfssystemen 20 zugerechnet werden.

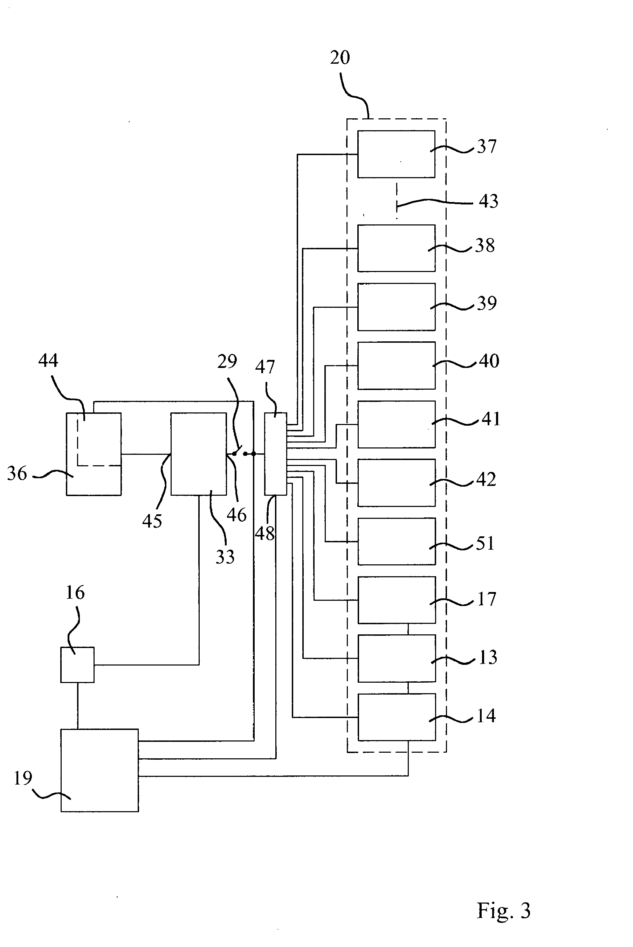

Aus Fig. 3 ist ein schematisches Blockschaltbild mit einer Steuerung 36 ersichtlich, die mit einem Steuereingang 45 des Umrichter 33 elektrisch gekoppelt ist. Insbesondere wird der Umrichter 33 über die Gate-Anschlüssen der IGBTs des Wechselrichters 21 gesteuert. Der spannungsabgebende Ausgang 46 des Umrichters 33 ist elektrisch mit einer Schalteinrichtung 47 verbunden, die mit den Hilfssystemen 20 elektrisch gekoppelt ist. Der Transformator 52 kann, sofern vorhanden, zwischen den Schalter 29 und die Schalteinrichtung 47 geschaltet sein. Ferner werden die Steuerung 36 und die Windenergieanlagensteuerung 19 über den Ausgang 46 des Umrichters 33 mit elektrischer Energie versorgt. Die Steuerung 36 umfasst eine Regelung 44, welche die von dem Umrichter 33 abgegebene Spannung und deren Frequenz misst und innerhalb vorgegebener Grenzen stabil hält.

Die Hilfssysteme 20 umfassen eine Heizung 37, eine Steuerung 38, einen Lüfter 39, eine Pumpe 40, eine Phasenkompensationseinrichtung 41, einen Energiespeicher 42, eine Kühlung 51, den Azimutantrieb 17 und die Rotorblattverstellantriebe 13 und 14. Ferner können noch andere Hilfssysteme vorgesehen sein, was durch die gestrichelte Linie 43 angedeutet ist. Die Schalteinrichtung 47 kann jedes der Hilfssysteme mit dem Ausgang 46 verbinden und/oder von diesem trennen und somit die Spannungsversorgung für das jeweilige Hilfssystem zuschalten bzw. abschalten. Dazu wird die Schalteinrichtung 47 von der Windenergieanlagensteuerung 19 gesteuert, die mit einem Steuereingang 48 der Schalteinrichtung 47 elektrisch verbunden ist.

Die Windenergieanlagensteuerung 19 misst wenigstens eine Betriebsgröße des Umrichters 23 und/oder des Generators 16. Wird anhand dieser Betriebsgröße festgestellt, dass die Generatorleistung zu hoch ist, so kann die Windenergieanlagensteuerung 19 die Verstelleinrichtungen 13, 14 zum Verdrehen der Rotorblätter 9, 10 um die Blattachsen 11, 12 ansteuern, um die Leistung zu reduzieren und/oder mittels der Schalteinrichtung 47 einzelne Hilfssysteme zuschalten, die nicht in Betrieb sind. Ferner kann die Windenergieanlagensteuerung 19 einzelne Hilfssysteme mittels der Schalteinrichtung 47 abschalten, wenn die Generatorleistung zu gering ist.

### Bezugszeichenliste

- 1: Windenergieanlage
- 2: Fundament
- 3: Turm
- 4: Maschinenhaus
- 5: Halterung
- 6: Rotor
- 7: Rotorachse
- 8: Rotornabe
- 9: Rotorblatt
- 10: Rotorblatt
- 11: Blattachse
- 12: Blattachse
- 13: Verstellantrieb
- 14: Verstallantrieb
- 15: Wind
- 16: Generator
- 17: Azimutantrieb
- 18: Längsachse des Turms
- 19: Windenergieanlagensteuerung
- 20: Hilfssysteme
- 21: Wechselrichter des zweiten Umrichters
- 22: Zwischenkreis des ersten Umrichters
- 23: erster Umrichter
- 24: Gleichrichter des ersten Umrichters
- 25: Wechselrichter des ersten Umrichters
- 26: Schalter
- 27: Energieverteilernetz
- 28: Schalter
- 29: Schalter
- 30: Schutzschaltung des ersten Umrichters
- 31: Zwischenkreis des zweiten Umrichters
- 32: Hochsetzsteller des zweiten Umrichters
- 33: zweiter Umrichter
- 34: Gleichrichter des zweiten Umrichters
- 35: zusätzlicher Gleichrichter des zweiten Umrichters
- 36: Steuerung
- 37: Heizung
- 38: Steuerung
- 39: Lüfter
- 40: Pumpe
- 41: Phasenkompensationseinrichtung
- 42: Energiespeicher
- 43: weitere Hilfssysteme
- 44: Regelung
- 45: Steuereingang
- 46: Ausgang
- 47: Schalteinrichtung
- 48: Steuereingang
- 49: Statorwicklung
- 50: Schalter
- 51: Kühlung
- 52: Transformator
- 53: Zwischenkreiskondensator des ersten Umrichters
- 54: Zwischenkreiskondensator des zweiten Umrichters

## Patentansprüche

1. Windenergieanlage mit
einer Halterung (5),
einem an der Halterung (5) um eine Rotorachse (7) drehbar gelagerten, mehrere Rotorblätter (9, 10) aufweisenden und mittels Windkraft (15) angetrieben oder antreibbaren Rotor (6),
einem mit dem Rotor (6) gekoppelten elektrischen Generator (16), der von dem Rotor (6) antreibbar oder angetrieben ist,
einem mit dem Generator (16) elektrisch gekoppelten ersten Umrichter (23), der mit einem elektrischen Verteilernetz (27) gekoppelt ist oder werden kann,
wenigstens einem elektrischen oder teilelektrischen Hilfssystem (20),
**dadurch gekennzeichnet, dass**
das wenigstens eine Hilfssystem (20) unter Zwischenschaltung eines zweiten Umrichters (33) elektrisch mit dem Generator (16) derart gekoppelt ist oder werden kann, dass es auch bei ausgefallenem oder gestörtem Verteilernetz (27) durch den Generator (16) mit elektrischer Energie versorgt werden kann.

2. Windenergieanlage nach Anspruch 1,
**dadurch gekennzeichnet, dass**
der zweite Umrichter (33) eingangsseitig unter Zwischenschaltung wenigstens eines ersten Schalters (26) elektrisch mit dem Generator (16) verbunden oder verbindbar ist.

3. Windenergieanlage nach Anspruch 1 oder 2,
**dadurch gekennzeichnet, dass**
der zweite Umrichter (33) ausgangsseitig unter Zwischenschaltung wenigstens eines zweiten Schalters (29) elektrisch mit dem wenigstens einen Hilfssystem (20) verbunden oder verbindbar ist.

4. Windenergieanlage nach einem der vorangehenden Ansprüche,
**dadurch gekennzeichnet, dass**
der zweite Umrichter (33) einen mit dem Generator (16) elektrisch gekoppelten oder koppelbaren Gleichrichter (34) und einen dem Gleichrichter (34) nachgeschalteten und mit dem wenigstens einen Hilfssystem (20) elektrisch gekoppelten oder koppelbaren Wechselrichter (21) aufweist.

5. Windenergieanlage nach Anspruch 4,
**dadurch gekennzeichnet, dass**
zwischen dem Gleichrichter (34) und dem Wechselrichter (21) ein Hochsetzsteller (32) geschaltet ist.

6. Windenergieanlage nach Anspruch 4 oder 5,
**dadurch gekennzeichnet, dass**
der zweite Umrichter (33) einen zusätzlichen Gleichrichter (35) aufweist, der mit dem elektrischen Verteilernetz (27) elektrisch gekoppelt ist oder werden kann.

7. Windenergieanlage nach Anspruch 6,
**dadurch gekennzeichnet, dass**
der zusätzliche Gleichrichter (35) unter Zwischenschaltung wenigstens eines dritten Schalters (50) mit dem elektrischen Verteilernetz (27) elektrisch verbunden oder verbindbar ist.

8. Windenergieanlage nach einem der vorangehenden Ansprüche,
**dadurch gekennzeichnet, dass**
das wenigstens eine Hilfssystem (20) unter Zwischenschaltung wenigstens eines vierten Schalters (28) mit dem elektrischen Verteilernetz (27) elektrisch verbunden oder verbindbar ist.

9. Windenergieanlage nach einem der vorangehenden Ansprüche,
**gekennzeichnet durch**
eine mit dem zweiten Umrichter (33) elektrisch verbundene Steuerung (36), mittels welcher wenigstens eine Betriebsgröße des wenigstens einen Hilfssystems (20) gesteuert oder geregelt wird oder werden kann.

10. Windenergieanlage nach Anspruch 9,
**dadurch gekennzeichnet, dass**
die Steuerung (36) die zumindest eine Betriebsgröße des wenigstens einen Hilfssystems (20) misst oder messen kann und durch Regelung des zweiten Umrichters (33) diese Betriebsgröße in spezifizierten Grenzen hält oder halten kann.

11. Windenergieanlage nach Anspruch 9 oder 10,
**dadurch gekennzeichnet, dass**
die wenigstens eine Betriebsgröße die von dem zweiten Umrichter (33) an das wenigstens eine Hilfssystem (20) abgegebene elektrische Spannung und/oder deren Frequenz umfasst.

12. Windenergieanlage nach einem der vorangehenden Ansprüche,
**dadurch gekennzeichnet, dass**
das wenigstens eine Hilfssystem (20) elektrisch von dem zweiten Umrichter (33) getrennt wird oder werden kann.

13. Windenergieanlage nach einem der vorangehenden Ansprüche,
**dadurch gekennzeichnet, dass**
das wenigstens eine Hilfssystem (20) von dem zweiten Umrichter (33) mit elektrischer Energie versorgbar ist, der gemäß einer ersten Betriebsart von dem Generator (16) und gemäß einer zweiten Betriebsart aus dem Verteilernetz (27) mit elektrischer Energie versorgbar ist, wobei zwischen der ersten und der zweiten Betriebsart umgeschaltet werden kann.

14. Windenergieanlage nach einem der vorangehenden Ansprüche,
**dadurch gekennzeichnet, dass**
das oder die Hilfssysteme (20) einen Azimutantrieb (17), wenigstens einen Rotorblattverstellantrieb (13, 14), wenigstens eine Heizung (37), wenigstens eine Steuerung (38), wenigstens einen Lüfter (39), wenigstens eine Pumpe (40), wenigstens eine Phasenkompensationseinrichtung (41) und/oder wenigstens einen Energiespeicher (42) umfassen.

15. Windenergieanlage nach einem der vorangehenden Ansprüche,
**dadurch gekennzeichnet, dass**
das wenigstens eine Hilfssystem (20) zumindest eine Heizung (37), Kühlung (51) und/oder zusätzliche Verbraucher (43) umfasst, die bei einem Ausfall oder einer Störung des elektrischen Verteilernetzes (27) durch den Generator (16) mit elektrischer Energie versorgt werden und dadurch Betriebsmittel der Windenergieanlage (1) auf einer Mindesttemperatur halten.

16. Windenergieanlage nach einem der vorangehenden Ansprüche,
**dadurch gekennzeichnet, dass**
der zweite Umrichter (33) das wenigstens eine Hilfssystem (20) mit elektrischer Energie versorgt, deren Frequenz sich von der Frequenz des elektrischen Verteilernetzes (27) unterscheidet.

17. Windenergieanlage nach einem der vorangehenden Ansprüche,
**dadurch gekennzeichnet, dass**
das wenigstens eine Hilfssystems (20) auch direkt oder unter Zwischenschaltung des zweiten Umrichters (33) durch das Verteilernetz (27) mit elektrischer Energie versorgt werden kann.

## Claims

1. Wind turbine having a support (5), a rotor (6) which is pivotably mounted on the support (5) about a rotor axis (7), has a plurality of rotor blades (9, 10) and is driven or can be driven by means of wind power (15), an electric generator (16) which is coupled to the rotor (6) and can be driven or is driven by the rotor (6), a first converter (23) which is electrically coupled to the generator (16) and is or can be coupled to an electric power distribution network (27), at least one electric or partially electric auxiliary system (20), **characterised in that** the at least one auxiliary system (20) is electrically coupled or can be electrically coupled to the generator (16) when a second converter (33) is interconnected such that it can also be provided with electric power by the generator (16) when the power distribution network (27) fails or is disrupted.

2. Wind turbine according to Claim 1, **characterised in that** the second converter (33) is electrically connected or can be electrically connected on the input side to the generator (16) when at least one first switch (26) is interconnected.

3. Wind turbine according to Claim 1 or 2, **characterised in that** the second converter (33) is electrically connected or can be electrically connected on the output side to the at least one auxiliary system (20) when at least one second switch (29) is interconnected.

4. Wind turbine according to any one of the preceding claims, **characterised in that** the second converter (33) has a rectifier (34), which is electrically coupled or can be electrically coupled to the generator (16), and an inverter (21) which is connected downstream of the rectifier (34) and is electrically coupled or can be electrically coupled to the at least one auxiliary system (20).

5. Wind turbine according to Claim 4, **characterised in that** a boost converter (32) is connected between the rectifier (34) and the inverter (21).

6. Wind turbine according to Claim 4 or 5, **characterised in that** the second converter (33) has an additional rectifier (35) which is electrically coupled or can be electrically coupled to the electric power distribution network (27).

7. Wind turbine according to Claim 6, **characterised in that** the additional rectifier (35) is electrically connected or can be electrically connected to the electric power distribution network (27) when at least one third switch (50) is interconnected.

8. Wind turbine according to any one of the preceding claims, **characterised in that** the at least one auxiliary system (20) is electrically connected or can be electrically connected to the electric power distribution network (27) when at least one fourth switch (28) is interconnected.

9. Wind turbine according to any one of the preceding claims, **characterised by** a control (36) which is electrically connected to the second converter (33) and by means of which control (36) at least one operation value of the at least one auxiliary system (20) is or can be controlled or regulated.

10. Wind turbine according to Claim 9, **characterised in that** the control (36) measures or can measure the at least one operation value of the at least one auxiliary system (20) and keeps or can keep this operation value within specific limits by regulating the second converter (33).

11. Wind turbine according to Claim 9 or 10, **characterised in that** the at least one operation value comprises the electric voltage and/or its frequency output by the second converter (33) to the at least one auxiliary system (20).

12. Wind turbine according to any one of the preceding claims, **characterised in that** the at least one auxiliary system (20) is or can be electrically separated from the second converter (33).

13. Wind turbine according to any one of the preceding claims, **characterised in that** the at least one auxiliary system (20) can be provided with electric power by the second converter (33) which according to a first operation mode can be provided with electric power by the generator (16) and according to a second operation mode can be provided with electric power from the power distribution network (27), wherein the first and the second operation modes can be switched between.

14. Wind turbine according to any one of the preceding claims, **characterised in that** the auxiliary system(s) comprises or comprise an azimuth drive (17), at least one rotor blade adjustment drive (13, 14), at least one heating unit (37), at least one control (38), at least one fan (39), at least one pump (40), at least one phase compensation device (41) and/or at least one energy storage device (42).

15. Wind turbine according to any one of the preceding claims, **characterised in that** the at least one auxiliary system (20) comprises at least one heating unit (37), cooling unit (51) and/or additional power consuming devices (43), which are provided with electric power by the generator (16) when the electric power distribution network (27) fails or is disrupted and thereby keep the equipment of the wind turbine (1) at a minimum temperature.

16. Wind turbine according to any one of the preceding claims, **characterised in that** the second converter (33) provides the at least one auxiliary system (20) with electric power, the frequency of which differs from the frequency of the electric power distribution network (27).

17. Wind turbine according to any one of the preceding claims, **characterised in that** the at least one auxiliary system (20) can also be provided with electric power by the power distribution network (27) directly or when the second converter (33) is interconnected

## Revendications

1. Installation éolienne munie de
un support (5)
un rotor (6) logé de manière rotative sur le support (5) autour d'un axe de rotor (7), comportant plusieurs pales de rotor (9, 10) et entraîné ou pouvant être entraîné par l'énergie éolienne (15),
un générateur électrique (16) couplé au rotor (6), qui peut être entraîné ou qui est entraîné par le rotor (6),
un premier convertisseur (23) couplé électriquement au générateur (16), qui est couplé ou qui peut être couplé à un réseau de distribution électrique (27),
au moins un système auxiliaire (20) électrique ou partiellement électrique,
**caractérisé en ce que**
l'au moins un système auxiliaire (20) est couplé ou peut être couplé électriquement au générateur (16) par l'interposition d'un deuxième convertisseur (33), de sorte qu'il puisse être alimenté en énergie électrique par le générateur (16) même en cas de panne ou de perturbation du réseau de distribution électrique (27).

2. Installation éolienne selon la revendication 1,
**caractérisé en ce que**
le deuxième convertisseur (33) est relié ou peut être relié électriquement au générateur (16) du côté de l'entrée par l'interposition d'un premier interrupteur (26).

3. Installation éolienne selon la revendication 1 ou 2,
**caractérisé en ce que**
le deuxième convertisseur (33) est relié ou peut être relié électriquement à l'au moins un système auxiliaire (20) du côté de la sortie par l'interposition d'au moins un deuxième interrupteur (29).

4. Installation éolienne selon l'une quelconque des revendications précédentes,
**caractérisé en ce que**
le deuxième convertisseur (33) présente un redresseur (34) couplé ou pouvant être couplé électriquement au générateur (16) et un onduleur (21) branché en aval du redresseur (34) et couplé ou pouvant être couplé électriquement à l'au moins un système auxiliaire (20).

5. Installation éolienne selon la revendication 4,
**caractérisé en ce**
**qu'**un convertisseur élévateur (32) est branché entre le redresseur (34) et l'onduleur (21).

6. Installation éolienne selon la revendication 4 ou 5,
**caractérisé en ce que**
le deuxième convertisseur (33) présente un redresseur supplémentaire (35) qui est couplé ou qui peut être couplé électriquement au réseau de distribution électrique (27).

7. Installation éolienne selon la revendication 6,
**caractérisé en ce que**
le redresseur supplémentaire (35) est relié ou peut être relié électriquement au réseau de distribution électrique (27) par l'interposition d'au moins un troisième interrupteur (50).

8. Installation éolienne selon l'une quelconque des revendications précédentes,
**caractérisé en ce que**
l'au moins un système auxiliaire (20) est relié ou peut être relié électriquement au réseau de distribution électrique (27) par l'interposition d'au moins un quatrième interrupteur (28).

9. Installation éolienne selon l'une quelconque des revendications précédentes,
**caractérisé par**
un dispositif de commande (36), relié électriquement au deuxième convertisseur (33), au moyen duquel au moins une valeur de service de l'au moins un système auxiliaire (20) est commandée, régulée ou peut être commandée ou régulée.

10. Installation éolienne selon la revendication 9,
**caractérisé en ce que**
le dispositif de commande (36) mesure ou peut mesurer l'au moins une valeur de service de l'au moins un système auxiliaire (20) et, grâce à une régulation du deuxième convertisseur (33), maintient ou peut maintenir cette valeur de service dans des limites spécifiées.

11. Installation éolienne selon la revendication 9 ou 10,
**caractérisé en ce que**
l'au moins une valeur de service comprend la tension électrique et/ou sa fréquence envoyée par le deuxième convertisseur (33) à l'au moins un système auxiliaire (20).

12. Installation éolienne selon l'une quelconque des revendications précédentes,
**caractérisé en ce que**
l'au moins un système auxiliaire (20) est débranché ou peut être débranché électriquement du deuxième convertisseur (33).

13. Installation éolienne selon l'une quelconque des revendications précédentes,
**caractérisé en ce que**
l'au moins un système auxiliaire (20) peut être alimenté en énergie électrique par le deuxième convertisseur (33), qui peut être alimenté en énergie électrique, selon un premier mode de fonctionnement, par le générateur (16) et, selon un deuxième mode de fonctionnement, par le réseau de distribution (27), il est possible de commuter entre le premier et le deuxième mode de fonctionnement.

14. Installation éolienne selon l'une quelconque des revendications précédentes,
**caractérisé en ce que**
le ou les systèmes auxiliaires (20) comportent un entraînement azimutal (17), au moins un entraînement de réglage des pales du rotor (13, 14), au moins un chauffage (37), au moins un dispositif de commande (38), au moins un ventilateur (39), au moins une pompe (40), au moins un dispositif de compensation de phase (41) et/ou au moins un accumulateur d'énergie (42).

15. Installation éolienne selon l'une quelconque des revendications précédentes,
**caractérisé en ce que**
l'au moins un système auxiliaire (20) comprend au moins un chauffage (37), un dispositif de refroidissement (51) et/ou des consommateurs supplémentaires (43) qui, dans le cas d'une panne ou d'une perturbation du réseau de distribution électrique (27), peuvent être alimentés en énergie électrique par le générateur (16) et maintiennent ainsi l'équipement de l'installation éolienne (1) à une température minimale.

16. Installation éolienne selon l'une quelconque des revendications précédentes,
**caractérisé en ce que**
le deuxième convertisseur (33) alimente l'au moins un système auxiliaire (20) en énergie électrique dont la fréquence est différente de la fréquence du réseau de distribution électrique (27).

17. Installation éolienne selon l'une quelconque des revendications précédentes,
**caractérisé en ce que**
l'au moins un système auxiliaire (20) peut également être alimenté en énergie électrique par le réseau de distribution électrique (27) directement ou par l'interposition du deuxième convertisseur (33).
